# EUROPEAN PATENT SPECIFICATION

(11) **EP 2 797 037 B1**
(45) Date of publication and mention of the grant of the patent: **06.02.2019**
(21) Application number: 12860304.0
(22) Date of filing: 17.12.2012
(51) Int. Cl.: G06M 1/10, B29C 45/17

(54) **ELECTRONIC MOLD COUNTER DEVICE**
ZÄHLERVORRICHTUNG FÜR ELEKTRONISCHE FORMEN
DISPOSITIF COMPTEUR DE MOULE ÉLECTRONIQUE

(30) Priority: 19.12.2011 KR 20110137762
(43) Date of publication of application: 29.10.2014
(73) Proprietor: PS Tech Co. Ltd., Seoul 133-821 (KR); Best Information Technology Co., Ltd., Seoul 137-912 (KR)
(72) Inventor: YU, Kwang Taig, Seoul 157-910 (KR); PARK, Soo Chul, Seoul 135-520 (KR); HAN, Guy Seok, Seoul 412-070 (KR); KIM, Han Jin, Seoul 132-033 (KR); LEE, Sang Hun, Seoul 121-250 (KR)
(74) Representative: Weickmann & Weickmann PartmbB
(86) International application number: PCT/KR2012/011013
(87) International publication number: WO 2013/094948

(56) References cited:
- JP-A- 2009 218 116
- KR-A- 20070 093 671
- KR-B1- 101 045 286
- SU-A1- 752 410
- US-A- 5 571 539
- US-A1- 2010 320 632

## Description

### Technical Field

An embodiment of the present invention relates to an electronic mold counter device.

### Background Art

Since a mold has a lowered accuracy after the repeated use for a prolonged period of time, the accuracy of a mold is lowered and it is necessary to use the mold by a predetermined number of times.

In this regard, a mold counter, called a shot counter, is incorporated into the mold to be used. The mold counter is configured to mechanically count the number of press-fittings for the mold, that is, a mold is used, by rotating a plurality of figure rings using a plurality of rotating plates.

However, the conventional mold counter has the following problems.

First, since the mold having a plate weak in mechanical strength may be deformed while being repeatedly press-fitted, the mold counter may malfunction.

In addition, since the plate is separately formed from a shaft, the production cost may increase.

Further, in a case where the counter has small-sized figure rings and figures, resulting in a dark screen, and is covered by dust, it is difficult to recognize the figures.

In addition, a conventional mechanical mold counter is managed in such a mechanically manual manner that cumulative counted values are identified by naked eye and managed. Thus, there is a high probability of generating an error due to an operator's mistake.

Further, in the conventional mechanical mold counter, costs incurred by oil change or poor management of production shortage of injected articles may increase, lowering management efficiency and product quality.

US 5571539 A shows an electronic counter device according to the preamble of claim 1.

US 2010/320632 A1 discloses a monitor for maintaining a mold cycle count with an actuator sending a count signal to a processor following a mold operation. The monitor further includes a timer having an active mode and a sleep mode. The processor generates an average cycle time and an activity percentage of the mold taking into account active and sleep periods of the mold.

It is an object of the invention to provide an electronic counter device configured to count a number of press-fittings for a mold, which allows higher working efficiency and improves heat dissipating characteristic of the counter device.

### Disclosure of the Invention

In order to overcome the above-mentioned shortcomings, the present invention defined by claim 1 provides an electronic counter device configured to count a number of press-fittings for a mold which uses an optical detection method to automatically count the mold production amount in a set time for higher working efficiency.

### Advantageous Effects

As described above, the electronic mold counter device according to the present invention uses an optical detection method, thereby automatically counting the mold production amount in a set time for higher working efficiency.

In addition, in the electronic mold counter device according to the present invention, heat dissipating units are provided outside a case of the counter device, thereby improving heat dissipating characteristic of the counter device.

### Brief Description of the Drawings

The objects, features and advantages of the present invention will be more apparent from the following detailed description in conjunction with the accompanying drawings, in which:
FIG. 1 is a perspective view of a general mold having a built-in counter to which an electronic mold counter device according to an embodiment of the present invention is applied;
FIG. 2 is a perspective view of an electronic mold counter device according to an embodiment of the present invention;
FIG. 3 is an exploded perspective view of an electronic mold counter device according to an embodiment of the present invention;
FIG. 4 is a cross-sectional view of the electronic mold counter device taken along the line I-I' of FIG. 2;
FIG. 5 is a circuit view illustrating an example of optical detection using an optical detection unit shown in FIG. 2; and
FIG. 6 is a block diagram schematically illustrating an electronic mold counter device according to an embodiment of the present invention and a mold production amount count system using the same.

### Best Mode for Carrying Out the Invention

Example embodiments of the present invention will now be described in more detail with reference to accompanying drawings, such that those skilled in the art can easily practice the present invention.

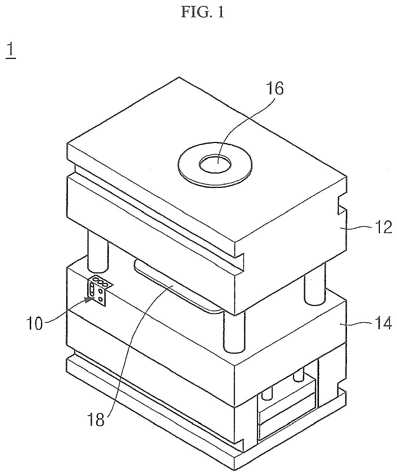

FIG. 1 is a perspective view of a general mold having a built-in counter to which an electronic counter device configured to count a number of press-fittings for a mold according to an embodiment of the present invention is applied.

Referring to FIG. 1, a mold 10 includes an upper mold 12 and a lower mold 14. A resin injection hole 16 is provided at a top end of the upper mold 12, and a cavity 18 is formed on a top surface of the lower mold 12. Although not shown, a cavity may also be formed on a bottom surface of the upper mold 12.

Meanwhile, the electronic mold counter device 100 according to the embodiment of the present invention may be installed in the lower mold 14. The electronic mold counter device 100 is configured to count a number of times a mold is used, that is, a mold is press-fitted, when the upper mold 12 is moved toward the lower mold 14.

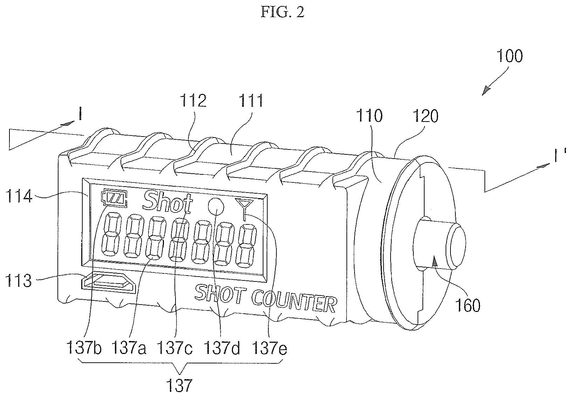

Hereinafter, an electronic mold counter device incorporated into the mold will now be described with reference to FIGS. 2 to 6.

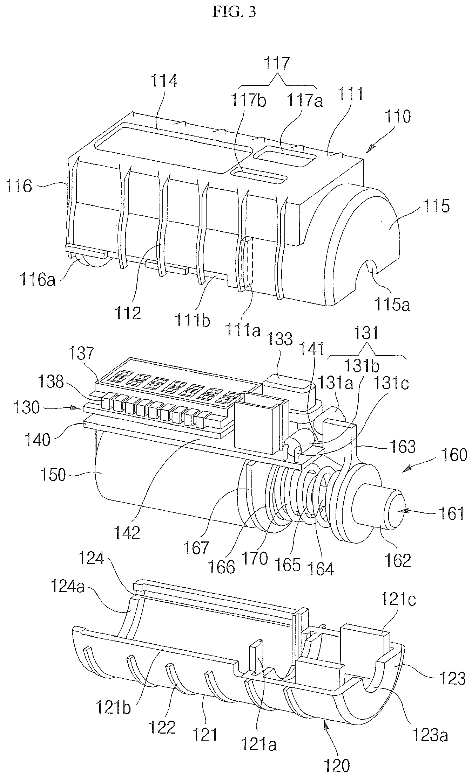

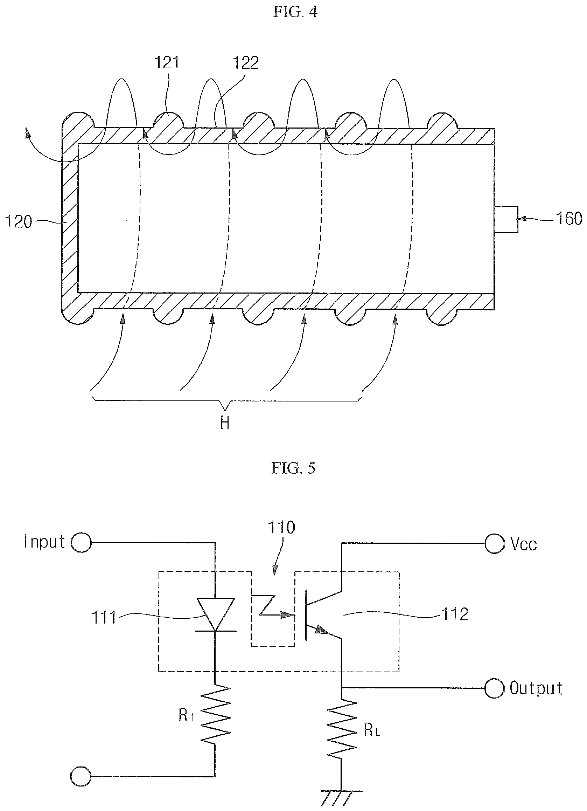

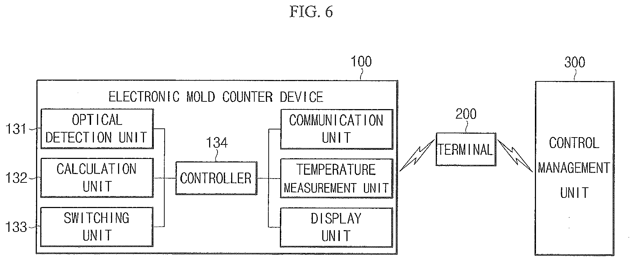

FIG. 2 is a perspective view of an electronic mold counter device according to an embodiment of the present invention, FIG. 3 is an exploded perspective view of an electronic mold counter device according to an embodiment of the present invention, FIG. 4 is a cross-sectional view of the electronic mold counter device taken along the line I-I' of FIG. 2, FIG. 5 is a circuit view illustrating an example of optical detection using an optical detection unit shown in FIG. 2, and FIG. 6 is a block diagram schematically illustrating an electronic mold counter device according to an embodiment of the present invention and a mold production amount count system using the same.

Referring to FIGS. 2 to 6, the electronic mold counter device 100 according to the embodiment of the present invention includes first and second cases 110 and 120 and a counting unit C.

The first and second cases 110 and 120 are mounted on the mold and the counting unit C is accommodated therein. The first and second cases 110 and 120 are substantially shaped of a cylinder formed by combining the first case 110 with the second case 120. In order to combine the first case 110 with the second case 120, a stepped portion 111b is formed at a combined region of the outer circumferential surface of the first case 110, and a stepped portion receiving portion 121b shaped to correspond to the stepped portion 111b is formed in the second case 120. In addition, in order to combine the first case 110 with the second case 120, a protruding portion 116a is formed on a first side surface 116 of lengthwise opposite side surfaces of the first case 110 and a coupling groove 124a into which the protruding portion 116a is fitted is formed on a third side surface 124 corresponding to the first side surface 116 of lengthwise opposite side surfaces of the second case 120. In addition, a receiving portion 111a is vertically formed on an inner sidewall of the first case 110, and at least one vertical protruding portion 121a corresponding to the receiving portion 111a and fitted into the receiving portion 111a is formed on an inner sidewall of the second case 120. In addition, at least one supporting portion 121c for supporting the first case 110 and the second case 120 when they are combined with each other is formed in the second case 120. With this configuration, the first case 110 and the second case 120 may be relatively tightly coupled to each other, compared to the conventional coupling method using a bolt.

In addition, a transparent window 114 is formed on the outer circumferential surface of the first case 110 to read internal figures from the outside. The window 114 is formed by forming an opening on the outer circumferential surface of the first case 110 and fixing a flat panel on the opening. In addition, the first case 110 has a switching hole 117 formed on a region adjacent to the window 114, the switching hole 117 allowing a switching unit 133 turning on/off the operation of the counting unit C to be described later to pass through.

In addition, shaft through-hole 115a and 123a are formed on a second side surface 115 opposite to the first side surface 116 of the first case 110 and a fourth side surface 123 opposite to the third side surface 124 of the second case 120 to allow a shaft 161 of an elastic member 160 to be described later to linearly move to/from the outside and inside of the first and second cases 110 and 120.

Meanwhile, each of the first case 110 and the second case 120 has a substantially hemispherical cross-section in a lengthwise direction. However, the outer circumferential surface of the first case 110 may have a predetermined region that is flatly formed according to the shape of the counting unit C disposed inside the first case 110, but the present invention does not limit the shapes of the first case 110 and the second case 120 to that stated herein.

The first and second cases 110 and 120 may further include heat dissipating units 112 and 122 spaced a predetermined distance apart from each other to surround external
surfaces of the first and second cases 110 and 120. Although not shown, a ceramic pigment including finely powdered tourmaline emitting negative ions and far infrared rays may be coated on exteriors of the heat dissipating units 112 and 122 (more specifically, outer surfaces of the heat dissipating units 112 and 122 exposed to the outside of the mold).

Referring to FIG. 4, vertically sectional shapes of the heat dissipating units 112 and 122 may be a triangle, a rectangle, or a circle, but the present invention does not limit the sectional shapes of the heat dissipating units 112 and 122 to those stated herein. Meanwhile, since high-temperature heat is generated during a press-fitting process of the conventional mold device, a mechanical counter device capable of withstanding a high temperature has been used. However, in the present invention, since each of the first and second cases 110 and 120 has a built-in electronic counting unit C, the heat dissipating units 112 and 122 are formed on outer surfaces of the first and second cases 110 and 120 accommodating the counting unit C to protect the counting unit C from high temperature. Therefore, in the present invention, high-temperature air H flowing to the outside of the first and second cases 110 and 120 through the heat dissipating units 112 and 122 is allowed to flow through a gap between the heat dissipating units 112 and 122, thereby dissipating the heat. Accordingly, the counting unit C provided inside the first and second cases 110 and 120 can be safely protected from the high-temperature air H flowing to the outside of the first and second cases 110 and 120.

The counting unit C is disposed inside the first and second cases 110 and 120 and counts the number of press-fittings for the mold. The counting unit C includes a printed circuit board 130, an optical detection unit 140, a power supply unit 150 and an elastic member 160.

The printed circuit board 130 includes a calculation unit 132 which counts the insertion operation of the detected elastic member 160 according to the press-fittings of the mold as the number of press-fittings for the mold. When the insertion of the elastic member 160 into the first and second cases 110 and 120 is detected by the optical detection unit 140, the calculation unit 132 counts the corresponding detection signal as the number of press-fittings for the mold.

In addition to the calculation unit 132, the printed circuit board 130 further includes a communication unit 135, a temperature measurement unit 136, a display unit 137 and a control unit 134.

The communication unit 135 transmits the number of press-fittings for the mold, counted by the calculation unit 132, to an external device through a communication network. In addition, the communication unit 135 transmits information on the number of press-fittings for the mold, information on a mold temperature, information on a power supply state of the power supply unit 150, information on a shorted state of the optical detection unit 140, and so on. The communication unit 135, including an interface 113 enabling wired/wireless communication, transmits the information on the number of press-fittings for the mold to an external device, such as a control management server, through a wired/wireless communication terminal. Accordingly, the user can efficiently control the electronic counter device according to the present invention from a remote location.

The temperature measurement unit 136 measures the temperature of the mold outside the first and second cases 110 and 120. The temperature measurement unit 136 is a sensor that measures the temperature of the mold, and the information on the measured temperature sensed by the sensor is transmitted to the control unit 134 to display the information on the display unit 137 or transmitted to the external device through the communication unit 135.

The display unit 137 displays the number 137a of press-fittings for the mold, counted by the calculation unit 132. The number 137a of press-fittings for the mold may be accumulated and counted in real time. As described above, in order to display the number 137a of press-fittings for the mold, conductive lines 138 corresponding to the number of figures are connected to the calculation unit 132. In addition, the display unit 137 may display the supply state and power remainder amount information 137b of the power supply unit 150, the shorted state information 137c of the optical detection unit 140, the mold temperature information 137d and the communication state information 137e of the communication unit 135 to the outside of the case.

The control unit 134 controls operations of the optical detection unit 140, the calculation unit 132, the communication unit 135, the temperature measurement unit 136 and the display unit 137. In particular, the control unit 134 may set and control a counting time range of the calculation unit 132 and a transmission time range of the communication unit 135. That is to say, the control unit 134 appropriately sets the counting time range of the calculation unit 132, thereby preventing an operational error of the calculation unit 132, that is, a counting error. Here, the counting time range of the calculation unit 132 may refer to a time range in which the insertion operation of the elastic member 160 is detected. In addition, the control unit 134 sets the transmission time range of the communication unit 135 to a predetermined period, and may transmit information on the number of press-fittings for the mold, information on a mold temperature, information on a power supply state of the power supply unit 150, information on a shorted state of the optical detection unit 140, and so on, to the external device in a periodical, stable manner.

The power supply unit 150 supplies power to the counting unit C including the control unit 134. Here, the power supply unit 150 may use one of a secondary battery, alternating current power and a solar cell. That is to say, externally supplied power may be used at a place where power supply is available, and a secondary battery or a battery charged using a solar cell to refill discharge power and to directly supply power may be used at a place where power supply is not available.

In the present invention, the secondary battery is illustrated by way of example. Here, the power supply unit 150 is installed to be fixed to a bottom portion of the plate 142 of the optical detection unit 140 to supply power to the control unit 134 of the printed circuit board 130 installed on the plate 142 through a predetermined conductive line (not shown).

The elastic member 160 includes the shaft 161 protruding so as to pass through the shaft through-hole 115a and 123a and is designed such that the shaft 161 is inserted into the first and second cases 110 and 120 by an elastic force applied when the mold is press-fitted. To this end, the elastic member 160 includes a spring 170 as well as the shaft 161. The spring 170 has an elastic force and is fixed to the inside of the first and second cases 110 and 120. More specifically, the spring 170 is fixed to the fixing plate 167 vertically fixedly installed on the bottom surface of the plate 142 of the optical detection unit 140. The fixing plate 167 has a shaft fixing panel 166 installed on its surface to fix the shaft 161. The shaft 161 vertically extends from the shaft fixing panel 166 and is installed to pass through the inside of the spring 170. More specifically, the shaft 161 includes a fixing ring 165 coupled to the shaft fixing panel 166, a first guide bar 164 extending from the shaft fixing panel 166 in a lengthwise direction of the spring 170 and a second guide bar 162 including a vertical bar 163 extending and protruding from the first guide bar 164 in its lengthwise direction. The vertical bar 163 is formed to protrude to the exterior side relative to the outer circumferential edge of the spring 170. In addition, the vertical bar 163 is formed to have a thickness smaller than a width of an insertion hole 141 of the optical detection unit 140 so as to be inserted into the insertion hole 141.

The afore-constructed shaft 161 linearly moves in a lengthwise direction of the spring 170 according to the pres-fittings of the mold to pass through the inside of the spring 170. Specifically, the shaft 161 moves to allow the vertical bar 163 to be inserted into the insertion hole 141 of the optical detection unit 140.

The optical detection unit 140 irradiates light into the elastic member 160 inserted into the first and second cases 110 and 120 and detects insertion of the elastic member 160. In order to implement the detection operation, the optical detection unit 140 includes an emitting part 131a, a receiving part 131b, and a plate 142.

The emitting part 131a and the receiving part 131b are spaced a predetermined distance apart from each other and are disposed to face each other. Preferably, the emitting part 131a and the receiving part 131b are fixedly installed on the plate 142 through a conductive fixing lead 131c to allow the insertion hole 141 formed in the plate 142 to be positioned therebetween. The thus formed emitting part 131a and receiving part 131b are electrically connected to the printed circuit board 130 to be described later by a separate conductive line (not shown) connected to the fixing lead 131c. Referring to FIG. 5, the emitting part 131a and the receiving part 131b may be configured by photo-interrupt circuits. That is to say, the emitting part 131a may be implemented by a light emitting diode, and the receiving part 131b may be implemented by an npn type circuit including a photo transistor. For example, if the vertical bar 163 of the shaft 161 is not inserted into the insertion hole 141 of the plate 142, light is received from the light emitting diode as the emitting part 131a to the photo transistor as the receiving part 131b and the photo transistor is turned on. Then, a current does not flow to an output port connected to a collector terminal of the photo transistor.

On the other hand, if the vertical bar 163 of the shaft 161 is inserted into the insertion hole 141 of the plate 142, light is blocked from the light emitting diode as the emitting part 131a to the photo transistor as the receiving part 131b and a current flows to an output port connected to a collector terminal of the photo transistor through a load resistor R_{L}. Therefore, when the shaft 161 is inserted into the insertion hole 141, the emitting part 131a and the receiving part 131b may transmit a current signal corresponding to the flowing current to the calculation unit 132 to be described later.

The plate 142 is flatly formed to be fixed to the inside of the first and second cases 110 and 120 and is disposed to be spaced apart from the printed circuit board 130 to be described later. In addition, the plate 142 includes the insertion hole 141 formed between the emitting part 131a and the receiving part 131b.

Therefore, in the present invention, when the vertical bar 163 of the shaft 161 is inserted into the insertion hole 141 of the plate 142 according to the press-fitting of the mold, the optical detection unit 131 detects the insertion of the vertical bar 163 and the calculation unit 132 counts the number of insertion operations detected, thereby electronically and automatically counting the number of press-fittings for the mold.

Referring to FIG. 6, the mold production amount count system using the electronic mold counter device according to an embodiment of the present invention includes the electronic mold counter device 100 shown in FIGS. 2 to 5, and a control management unit 300 controlling the operation of the electronic mold counter device 100 using measurement values of measured items transmitted through the electronic mold counter device 100 and the communication terminal 200 in a wired/wireless manner in real time. Here, the measured items transmitted in real time may include information on the number of press-fittings for the mold, transmitted from the communication unit 135 provided in the electronic mold counter device 100, information on a mold temperature, information on a power supply state of the power supply unit 150, information on a shorted state of the optical detection unit 140, and so on. Here, the control management unit 300 may include a user interface (UI) and software such as a database management system (DBMS).

Therefore, the user may monitor the information on the measurement data of the electronic mold counter device 100 according to the present invention through the software of the control management unit 300, and can efficiently manage the electronic mold counter device according to the present invention from a remote location based on the information.

Although the electronic mold counter device according to an exemplary embodiment of the present invention has been described in detail hereinabove, it should be understood that many variations and modifications of the basic inventive concept herein described, which may appear to those skilled in the art, will still fall within the scope of the exemplary embodiments of the present invention as defined by the appended claims.

## Claims

1. An electronic counter device configured to count a number of press-fittings for a mold (10), comprising:
a case (110, 120) mounted on the mold (10) and having a shaft through-hole (115a, 123a) on one side thereof; and
a counting unit disposed inside the case to count the number of press-fittings for the mold (10),
wherein the counting unit comprises:
an elastic member (160) which comprises a spring (170) fixedly installed within the case and a shaft (161) adapted to penetrate the shaft through-hole (115a, 123a) of the case (110, 120) and thereby to protrude, and
a calculation unit (132) adapted to count the insertion operation of the elastic member (160) as the number of press-fittings for the mold,
**characterized in that** the shaft (161) includes a bar (163) protruding on an outer circumferential edge, and is disposed to pass through the inside of the spring (170) by a linear movement in a lengthwise direction of the spring (170) so as to move to allow the bar (163) to be positioned to be adjacent to the optical detection unit (140) when the mold is press-fitted;
that the counting unit further comprises an optical detection unit (140) adapted to irradiate the inserted elastic member (160) with light to detect the insertion operation of the elastic member (160); and
that the case (110, 120) further includes heat-dissipating units (112, 122) spaced a predetermined distance apart from each other and protruding to surround an external surface of the case.

2. The electronic counter device of claim 1, wherein the optical detection unit (140) comprises:
an emitting part (131a) adapted to emit light;
a receiving part (131b) spaced a predetermined distance apart from the emitting part (131a), disposed to face the emitting part (131a) and receiving the light; and
a plate (142) having the emitting part (131a) and the receiving part (131b) installed on its surface and an insertion hole (144) provided at a region between the emitting part (131a) and the receiving part (131b).

3. The electronic counter device of claim 2, wherein the device is configured to allow the bar (163) to be inserted into the insertion hole (141), and the calculation unit (132) is adapted to count the number of times the emitting part (131a) emits light to the bar (163) inserted into the insertion hole (141) according to the press-fitting of the mold and the receiving part (131b) cannot receive the emitted light as the number of press-fittings for the mold.

4. The electronic counter device of claim 2 or 3, wherein the calculation unit (132) is formed on a printed circuit board (130), and the printed circuit board (130) is formed on the plate (142) and further includes a display unit (137) adapted to display the number of press-fittings for the mold, counted in the calculation unit (132); a communication unit (135) adapted to transmit the number of press-fittings for the mold, counted in the calculation unit (132) to an external device through a communication network; and a controller controlling operations of the optical detection unit, the calculation unit (132), the display unit (137) and the communication unit (135) to set and control a counting time range of the calculation unit (132) and a transmission time range of the communication unit (135).

5. The electronic counter device of claim 4, wherein the printed circuit board (130) further includes a temperature measurement unit (136) adapted to measure a temperature of the mold outside the case, and the counting unit further includes a power supply unit (150) adapted to supply power, wherein the display unit (137) is adapted to display information on the temperature of the mold, measured by the temperature measurement unit (136) and information on a power supply state of the power supply unit (150) and a power remainder amount.

## Patentansprüche

1. Elektronische Zählervorrichtung, die konfiguriert ist, um eine Anzahl von Pressungen für eine Form (10) zu zählen, wobei sie aufweist:
ein Gehäuse (110, 120), das an der Form (10) angebracht ist und das an seiner einen Seite ein Schaftdurchgangsloch (115a, 123a) aufweist; und
eine Zähleinheit, die innerhalb des Gehäuses angeordnet ist, um die Anzahl von Pressungen für die Form (10) zu zählen,
wobei die Zähleinheit aufweist:
ein elastisches Element (160), das eine Feder (170) aufweist, die in dem Gehäuse fest angebracht ist, sowie einen Schaft (161), der dazu ausgelegt ist, das Schaftdurchgangsloch (115a, 123a) des Gehäuses (110, 120) zu durchsetzen und hierdurch vorzustehen, und
eine Recheneinheit (132), die dazu ausgelegt ist, als die Anzahl der Pressungen für die Form den Einsetzvorgang des elastischen Elements (160) zu zählen,
**dadurch gekennzeichnet, dass** der Schaft (161) eine Stange (163) enthält, die an einem Außenumfangsrand vorsteht, um durch eine Linearbewegung in Längsrichtung der Feder (170) durch die Innenseite der Feder (170) hindurchzutreten, um sich zu bewegen, um zu erlauben, dass die Stange (163) benachbart der optischen Detektionseinheit (140) positioniert wird, wenn die Form gepresst wird;
dass die Zahleinheit ferner eine optische Detektionseinheit (140) aufweist, die dazu ausgelegt ist, das eingesetzte elastische Element (160) mit Licht zu bestrahlen, um den Einsetzvorgang des elastischen Elements (160) zu detektieren; und
dass das Gehäuse (110, 120) ferner Wärmeabführeinheiten (112, 122) enthält, die mit einem vorbestimmten Abstand voneinander angeordnet sind und vorstehen, so dass sie eine Außenoberfläche des Gehäuses umgeben.

2. Die elektronische Zählervorrichtung von Anspruch 1, wobei die optische Detektionseinheit (140) aufweist:
ein Sendeteil (131a), das dazu ausgelegt ist, Licht zu senden;
ein Empfangsteil (131b), das mit einem vorbestimmten Abstand von dem Sendeteil (131a) so angeordnet ist, dass es zu dem Sendeteil (131a) weist und das Licht empfängt; und
eine Platte (142), auf deren Oberfläche das Sendeteil (131a) und das Empfangsteil (131b) angebracht sind, und die ein Einsetzloch (144) aufweist, das an einem Bereich zwischen dem Sendeteil (131a) und dem Empfangsteil (131b) vorgesehen ist.

3. Die elektronische Zählervorrichtung von Anspruch 2, wobei die Vorrichtung konfiguriert ist, um zu erlauben, dass die Stange (163) in das Einsetzloch (141) eingesetzt wird, und die Recheneinheit (132) dazu ausgelegt ist, als die Anzahl von Pressungen für die Form die Häufigkeit zu zählen, mit der das Sendeteil (131a) zu der gemäß den Pressungen der Form Licht in das Einsetzloch (141) eingesetzten Stange (163) sendet, und das Empfangsteil (131b) das gesendete Licht nicht empfangen kann.

4. Die elektronische Zählervorrichtung von Anspruch 2 oder 3, wobei die Recheneinheit (132) aus einer gedruckten Schaltplatine (130) gebildet ist, und die gedruckte Schaltplatine (130) auf der Platte (142) ausgebildet ist, und ferner eine Anzeigeeinheit (137) enthält, die dazu ausgelegt ist, die in der Recheneinheit (132) errechnete Anzahl der Pressungen für die Form anzuzeigen; eine Kommunikationseinheit (135), die dazu ausgelegt ist, die in der Recheneinheit (132) gezählte Anzahl der Pressungen für die Form, durch ein Kommunikationsnetzwerk zu einer externen Vorrichtung zu senden; sowie einen Controller, der Operationen der optischen Detektionseinheit, der Recheneinheit (132), der Anzeigeeinheit (137) und der Kommunikationseinheit (135) steuert, um einen Zählzeitbereich der Recheneinheit (132) und einen Sendezeitbereich der Kommunikationseinheit (135) zu setzen und zu steuern.

5. Die elektronische Zählervorrichtung von Anspruch 4, wobei die gedruckte Schaltplatine (130) ferner eine Temperaturmesseinheit (136) enthält, die dazu ausgelegt ist, eine Temperatur der Form außerhalb des Gehäuses zu messen, und die Zähleinheit ferner eine Energieversorgungseinheit (150) enthält, die dazu ausgelegt ist, Energie zuzuführen, wobei die Anzeigeeinheit (137) dazu ausgelegt ist, Information zur von der Temperaturmesseinheit (136) gemessenen Temperatur der Form sowie Information zum Energieversorgungszustand der Energieversorgungseinheit (150) und einer Energierestmenge anzuzeigen.

## Revendications

1. Dispositif compteur électronique configuré pour compter un nombre d'emmanchements pour un moule (10), comprenant :
un boîtier (110, 120) monté sur le moule (10) et ayant un trou débouchant d'arbre (115a, 123a) sur un côté de celui-ci ; et
une unité de comptage disposée à l'intérieur du boîtier pour compter le nombre d'emmanchements pour le moule (10),
dans lequel l'unité de comptage comprend :
un élément élastique (160) qui comprend un ressort (170) installé de manière fixe à l'intérieur du boîtier et un arbre (161) adapté pour pénétrer dans le trou débouchant d'arbre (115a, 123a) du boîtier (110, 120) et ainsi faire saillie, et
une unité de calcul (132) adaptée pour compter l'opération d'insertion de l'élément élastique (160) comme nombre d'emmanchements pour le moule,
**caractérisé en ce que** l'arbre (161) inclut une barre (163) faisant saillie sur un bord circonférentiel externe, et est disposé pour passer à travers l'intérieur du ressort (170) par un mouvement linéaire dans une direction longitudinale du ressort (170) de manière à se déplacer pour permettre à la barre (163) d'être positionnée pour être adjacente à l'unité de détection optique (140) lorsque le moule est emmanché ;
**en ce que** l'unité de comptage comprend en outre une unité de détection optique (140) adaptée pour irradier l'élément élastique (160) inséré avec de la lumière pour détecter l'opération d'insertion de l'élément élastique (160) ; et
**en ce que** le boîtier (110, 120) inclut en outre des unités de dissipation de chaleur (112, 122) espacées d'une distance prédéterminée les unes des autres et faisant saillie pour entourer une surface externe du boîtier.

2. Dispositif compteur électronique selon la revendication 1, dans lequel l'unité de détection optique (140) comprend :
une partie émettrice (131a) adaptée pour émettre de la lumière ;
une partie réceptrice (131b) espacée d'une distance prédéterminée de la partie émettrice (131a), disposée pour faire face à la partie émettrice (131a) et recevant la lumière ; et
une plaque (142) ayant la partie émettrice (131a) et la partie réceptrice (131b) installées sur sa surface et un trou d'insertion (144) prévu au niveau d'une région entre la partie émettrice (131a) et la partie réceptrice (131b).

3. Dispositif compteur électronique selon la revendication 2, dans lequel le dispositif est configuré pour permettre à la barre (163) d'être insérée dans le trou d'insertion (141), et l'unité de calcul (132) est adaptée pour compter le nombre de fois où la partie émettrice (131a) émet de la lumière vers la barre (163) insérée dans le trou d'insertion (141) en fonction de l'emmanchement du moule et la partie réceptrice (131b) ne peut recevoir la lumière émise comme nombre d'emmanchements pour le moule.

4. Dispositif compteur électronique selon la revendication 2 ou 3, dans lequel l'unité de calcul (132) est formée sur une carte de circuit imprimé (130) et la carte de circuit imprimé (130) est formée sur la plaque (142) et inclut en outre une unité d'affichage (137) adaptée pour afficher le nombre d'emmanchements pour le moule, compté dans l'unité de calcul (132) ; une unité de communication (135) adaptée pour transmettre le nombre de d'emmanchements pour le moule, compté dans l'unité de calcul (132) à un dispositif externe par l'intermédiaire d'un réseau de communication ; et un dispositif de commande commandant des opérations de l'unité de détection optique, l'unité de calcul (132), l'unité d'affichage (137) et l'unité de communication (135) pour régler et commander une plage temporelle de comptage de l'unité de calcul (132) et une plage temporelle de transmission de l'unité de communication (135).

5. Dispositif compteur électronique selon la revendication 4, dans lequel la carte de circuit imprimé (130) inclut en outre une unité de mesure de température (136) adaptée pour mesurer une température du moule à l'extérieur du boîtier, et l'unité de comptage inclut en outre une unité d'alimentation électrique (150) adaptée pour fournir une alimentation électrique, dans lequel l'unité d'affichage (137) est adaptée pour afficher des informations sur la température du moule, mesurée par l'unité de mesure de température (136) et des informations sur un état de l'alimentation électrique de l'unité d'alimentation électrique (150) et une valeur du reste de puissance électrique.
